# EUROPEAN PATENT APPLICATION

(11) **EP 4 553 530 A1**
(43) Date of publication of application: **14.05.2025**
(21) Application number: 23208764.3
(22) Date of filing: 09.11.2023
(51) Int. Cl.: G01S 5/02, G01S 19/19, G01S 19/39, G01S 19/40

(54) **METHOD FOR GENERATING A TRACK OF MOVEMENT STATES OF A TERMINAL DEVICE**

(71) Applicant: u-blox AG, 8800 Thalwil (CH)
(72) Inventor: Hide, Christopher, Reigate, RH2 9QQ (GB); Truempi, Kevin, 8800 Tahlwil (CH)
(74) Representative: Epping - Hermann - Fischer

(57) **Abstract**

A method is provided for generating a track of movement states of a terminal device moving between a first time point T0 to a second time point T, wherein the movement state comprises a position of the terminal device. The method comprises that the server obtains positioning measurements at respective time points t(k) between T0 and T via the terminal device, wherein k is an integer and is an index of the time points, 0 ≤ k ≤ N, N is an integer and N > 0, t(0) = T0, and t(N) = T; the server determines for each time point t(k), the movement state of the terminal device at the time point t(k), wherein when 0 ≤ k < N, the server determines the position of the terminal device at t(k) using the positioning measurements between a respective third time point t(k-a) and a respective fourth time point t(k+b), wherein a and b are integers, 0 ≤ a ≤ k, and 0 < b ≤ (N-k), when k = N, the server determines the position of the terminal device at t(k) using the positioning measurements between the third time point t(k-a) and t(k); and the server generates the track of the movement states of the terminal device by combining the determined positions.

## Description

### TECHNICAL FIELD

This disclosure relates to a method for generating a track of movement states of a terminal device. The disclosure further relates to a computing apparatus, a system and a computer program product.

### BACKGROUND ART

Various kinds of terminal devices, such as mobile phones and wearable devices, are widely used for providing tracks of positions to users. For example, in many scenarios, users may be interested in the tracks of positions when they do outdoor sports such as jogging or skiing, or when they visit places while travelling. The smart phones or the wearable devices carried with the users may obtain positions during the movements of the users and provide the tracks of positions to the users.

Such terminal devices however have limited capability, for example, relatively low performance in the hardware due to limited size of the terminal devices. If a terminal device relies on global navigation satellite system, GNSS, signals to obtain positions of the terminal device, relatively smaller GNSS antennas may lead to poor reception of GNSS signals and inaccurate positions. In addition, users may move in various environments, such as in urban or in nature, with different conditions due to buildings, streets, woods, weather, etc. Such environments may further influence the reception of GNSS signals and introduce further uncertainties in the obtained positions. In such case, the track of the positions could be rather different to the real track of the positions of the terminal device. It is desired to provide an accurate track of positions of the terminal device that is close to the real track.

In conventional applications such situations are not well addressed.

### SUMMARY OF INVENTION

An object to be achieved is to provide an improved processing concept for generating a track of movement states of a terminal device with higher accuracy.

This object is achieved with the subject-matter of the independent claims. Embodiments and developments derive from the dependent claims.

According to the present disclosure, a terminal device is attached with a user or an object. The terminal device moves with the user or the object for a period of time. A server obtains positioning measurements via the terminal device for that period of time, and generates a track of positions of the terminal device for that period of time. Such a track of positions can be represented as a sequence of positions with a starting position and an end position, describing a track of movement of the terminal device from the starting position to the end position.

The improved processing concept is based on the idea that the server determines a position of the terminal device at a point of time not only using the positioning measurements at that point of time, but also using the positioning measurements before and after that point of time. In this way, the determination of the position at that point of time takes into account the positioning measurements from the past and in the future of that point of time. The accuracy of the determined position can be improved by considering the underlying correlation of the real positions in the past and in the future. The track of positions is generated by combining the determined positions and therefore, the generated track is closer to the real track of positions and the accuracy of the generated track is improved.

Furthermore, based on the improved processing concept, not only the positions can be determined with higher accuracy, but also other movement information, such as a velocity corresponding to a position or a time corresponding to a position, can be determined with higher accuracy under the same framework. A track of all these movement information can be generated with higher accuracy.

According to the present disclosure, a method is provided for generating a track of movement states of a terminal device moving between a first time point T0 to a second time point T, wherein the movement state comprises a position of the terminal device and T0 < T. The method comprises that the server obtains positioning measurements at respective time points t(k) between T0 and T via the terminal device, wherein k is an integer and is an index of the time points, 0 ≤ k ≤ N, N is an integer and N > 0, t(0) = T0, and t(N) = T; the server determines for each time point t(k), the movement state of the terminal device at the time point t(k), wherein when 0 ≤ k < N, the server determines the position of the terminal device at t(k) using the positioning measurements between a respective third time point t(k-a) and a respective fourth time point t(k+b), wherein a and b are integers, 0 ≤ a ≤ k, and 0 < b ≤ (N-k), and when k = N, the server determines the position of the terminal device at t(k) using the positioning measurements between the third time point t(k-a) and t(k); and the server generates the track of the movement states of the terminal device by combining the determined positions, particularly of all time points t(k), into a sequence of the determined positions in the order according to k, with the determined position at t(0) being a starting position in the sequence and the position at t(N) being an end position in the sequence. In this way, the server uses the positioning measurements at t(k) and the positioning measurements before and after t(k) when available for determining the position at t(k), so that the generated track is more accurate and closer to the real track.

In an example implementation of the method, when 0 ≤ k < N, the server determines the position of the terminal device at t(k) based on Kalman smoothing, including formulating a state vector at each t(k), wherein the state vector comprises a coarse position of the terminal device based on the positioning measurements at t(k); and computing the position at t(k) using the Kalman smoothing based on the state vectors between t(k-a) and t(k+b). By using the Kalman smoothing, the positioning measurements in the past and in the future are filtered, so that the determined positions are smoothed results from the past and the future, the underlying correlation of real positions in the part and the in the future in the real track is effectively involved in the results, therefore the determined positions and the generated track are more accurate.

In some implementations of the method, the movement state further comprises a velocity of the terminal device and/or a time corresponding to the position of the terminal device. For example, the positioning measurements include measurements for determining not only the positions of the terminal device but also the velocities corresponding to the positions or the time corresponding to the positions, such that the velocities or the time can be determined in addition to the positions when determining movement states, and the track of the movement states is a track of the positions with the correspondent velocities or the correspondent time. In such implementations, the track of movement states provides more types of information of the movement of the terminal device with high accuracy.

In some implementations of the method, the positioning measurements may comprise at least one of: GNSS measurements, or sensor measurements such as WiFi ranging measurements or Bluetooth ranging measurements, measurements of arriving angles or departing angles, etc. The GNSS measurements may comprise Doppler measurements, ranging measurements, or carrier phase measurements, etc. In such implementations, more types of measurements can be used under the same framework for generating the track, and the accuracy of the track can be further improved.

In some implementations of the method, various assistant information may be used by the server for determining the positions of the terminal device, such as a position of a GNSS satellite, an orbit of a GNSS satellite, ionospheric data, troposphere models, inertial sensor data, or GNSS correction data. Such assistant information may be used to correct the positioning measurements, or to evaluate the quality or reliability of the positioning measurements, so that the positioning measurements can be used with different confidence levels or different weights in determining the positions. Therefore, in such implementations, the accuracy of the track can be further improved.

In an example implementation of the method, the terminal device obtains and records the positioning measurements at each t(k); and the terminal device provides the recorded positioning measurements to the server, so that the server obtains positioning measurements for generating the track.

In an example implementation of the method, the server provides the generated track of the movement states of the terminal device to the terminal device; and the terminal device displays the track on a display of the terminal device, so that a user can view the track from the display.

The present disclosure further provides a computing apparatus according to the improved processing concept for generating a track of movement states of a terminal device.

The computing apparatus is configured to obtain positioning measurements at respective time points t(k) between a first time point T0 to a second time point T of a terminal device, wherein k is an integer and is an index of the time points, 0 ≤ k ≤ N, N is an integer, t(0) = T0, and t(N) = T. The computing apparatus is further configured to determine a movement state of the terminal device for each time point t(k), wherein the movement state comprises a position of the terminal device, and when 0 ≤ k < N, the computing apparatus is configured to determine the position of the terminal device at t(k) using the positioning measurements between a respective third time point t(k-a) and a respective fourth time point t(k+b), wherein a and b are integers, 0 ≤ a ≤ k, and 0 < b ≤ (N-k), when k = N, the computing apparatus is configured to determine the position of the terminal device at t(k) using the positioning measurements between the third time point t(k-a) and t(k). The computing apparatus is further configured to generate a track of the movement states of the terminal device by combining the determined positions, particularly of all time points t(k), into a sequence of the determined positions in the order according to k, with the determined position at t(0) being a starting position in the sequence and the position at t(N) being an end position in the sequence.

In some implementations of the computing apparatus, when 0 ≤ k < N, the computing apparatus may be further configured to formulate a state vector at each t(k), wherein the state vector comprises a coarse position of the terminal device based on the positioning measurements at t(k); and compute the position at t(k) using Kalman smoothing based on the state vectors between t(k-a) and t(k+b).

In some implementations of the computing apparatus, the movement state further comprises a velocity of the terminal device and/or a time corresponding to the position of the terminal device.

In some implementations of the computing apparatus, the positioning measurements comprises at least one of: global navigation satellite system, GNSS, measurements or sensor measurements, wherein the GNSS measurements comprise Doppler measurements and ranging measurements.

Further implementations of the computing apparatus become readily apparent from the various implementations described above in conjunction with the method.

A system according to the improved processing concept may comprise a computing apparatus configured according to one of the above implementations and a terminal device. The terminal device may be configured to obtain positioning measurements at each t(k), to record the positioning measurements of each t(k), and to provide the recorded positioning measurements of each t(k) to the computing apparatus.

In an example implementation of the system, the computing apparatus may be further configured to provide the track of movement states of the terminal device to the terminal device. The terminal device may be further configured to display the track on a display of the terminal device.

In an example implementation of the system, the system may be further configured to comprise a mobile phone. The terminal device may be a wearable device and further configured to provide the recorded positioning measurements of each t(k) to the computing apparatus via the mobile phone.

Further implementations and developments in the system become readily apparent for the skilled reader from the various implementations described above in conjunction with the method.

According to one embodiment of the improved processing concept, a computer program comprises instructions which, when executed on one or more processors of at least a computing device, cause the one or more processors to perform the operations of a server according to one of the implementations described above.

Furthermore, a computer system may have one or more processors and a storage medium having computer program instructions stored therein, enabling the one or more processors to execute a method according to one of the implementations described above.

### BRIEF DESCRIPTION OF DRAWINGS

The improved processing concept will be explained in more detail in the following with the aid of the drawings. Elements and functional blocks having the same or similar function bear the same reference numerals throughout the drawings. Hence their description is not necessarily repeated in the following drawings.

In the drawings:
- Figure 1: shows an example track of movement states of a terminal device;
- Figure 2: shows a flowchart of a method for generating a track of movement states of a terminal device;
- Figure 3: shows an example system; and
- Figure 4: shows another example system.

### DETAILED DESCRIPTION

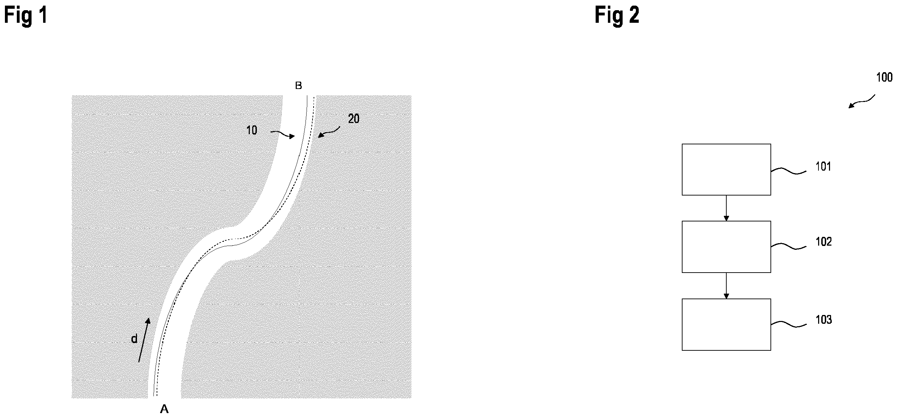

Figure 1 shows an example track of movement states of a terminal device. The terminal device may be any kind of portable devices, such as a mobile phone or any kind of wearable devices such as a sport watch or a smart watch. The terminal device may be attached to a user or to an object such as a bicycle or a car, etc., so that the terminal device moves with the user or the object.

In the example shown in Figure 1, the terminal device moves along a path shown in white in Figure 1 from a path end A to a path end B in a direction d. Track 10 shown as the solid line in Figure 1 is a real track on which the terminal device moves in reality during a period time, for example from a time point T0 to a time point T. Track 20 shown as the dotted line in Figure 1 is a possible track generated based on positioning measurements during the period of time. Ideally, a generated track is desired to be as close as possible to the real track.

In particular, a generated track is a track of positions of the terminal device. A generated track can be represented as a sequence of positions with a starting position and an end position, describing a track of movement of the terminal device from the starting position to the end position. In some implementations, a generated track may contain more information on the movement of the terminal device. For example, a movement state of the terminal device may contain a position, a velocity at this position or a precise time when the terminal device reaches this position. A generated track of movement states may thus contain a track of positions and the correspondent velocities or correspondent time for the positions. For example, a sequence of such movement states representing the generated track contains a sequence of positions associated with the correspondent velocities or correspondent time for the positions.

Figure 2 shows a flowchart of method 100 for generating a track of movement states of a terminal device. For example, method 100 may generate track 20 in Figure 1.

In step 101, a server obtains positioning measurements during a period of time from T0 and T via the terminal device.

The server may be a remote server, a cloud server or a service provider. The server may receive the positioning measurements from the terminal device. In an example implementation, the positioning measurements may be available at the terminal device to be provided to the server. In further example implementations, the positioning measurements or part of the positioning measurements may be available at another sensor associated with the terminal device, or another wearable device associated with the terminal device. The positioning measurements or the part of them are collected at the terminal device to be further provided to the server.

In an example implementation, the server may obtain the positioning measurements after T, i.e., after the period of time when the terminal device moves on track 10 in Figure 1. In such implementation, the terminal device may obtain the positioning measurements locally or from another sensor, and record the positioning measurements at the terminal device. Afterwards, the terminal device may provide the recorded positioning measurements to the server. In further example implementations, the server may obtain the positioning measurements during the movement of the terminal device in realtime or at intervals.

The positioning measurements contain positioning measurements at discrete time points during T0 and T. For example, the positioning measurements contain the positioning measurements at respective time points t(k) between T0 and T, wherein k is an integer and is an index of the time points, 0 ≤ k ≤ N, N is an integer and N > 0, t(0) = T0, and t(N) = T.

In example implementations, the positioning measurements may include GNSS measurements. For example, the GNSS measurements may comprise Doppler measurements, ranging measurements, or carrier phase measurements, etc. Alternatively or in addition, the positioning measurements may include other sensor measurements. For example, the positioning measurements may include ranging measurements or measurements of angle of arrival or angle of departure using WiFi or Bluetooth technology.

In example implementations, the positioning measurements may be associated with various assistant information which may be obtained by the server, such as a position of a GNSS satellite, an orbit of a GNSS satellite, ionospheric data, troposphere models, inertial sensor data, or GNSS correction data. Such assistant information may be used to correct the positioning measurements, or to evaluate the quality or reliability of the positioning measurements, so that the positioning measurements can be used with different confidence levels or different weights in determining the positions.

In step 102, the server determines the movement states for all the discrete time points during T0 and T. In particular, the server determines the movement state of the terminal device at the time point t(k). The movement state comprises at least the position of the terminal device at the time point t(k). In such implementation, determining the movement state at t(k) comprises determining the position at t(k).

When determining the position at t(k), a past time window and a future time window with respect to t(k) can be determined. The past time window may be set as a time window between t(k-a) and t(k), where 0 ≤ a ≤ k, and the future time window may be set as a time window between t(k) and t(k+b), where 0 < b ≤ (N-k). When determining the position at t(k), not only the positioning measurements at t(k), but also the positioning measurements at time points in the past time window and in the future time window, as long as such positioning measurements are available, are all used for determining the position at t(k). In such implementation, when determining the position at t(k) when 0 ≤ k < N, the determination of the position at t(k) takes into account future positions after t(k).

In such implementations, a can be regarded as the size of the past time window, and b can be regarded as the size of the future time window. The window sizes a and b may be predetermined or set when determining the position at t(k). The window sizes a and b may have same or different values. For example, for a time point t(k), a and b may have same or different values depending on how many positioning measurements are available in the past time window and the future time window. The size a may be set to 0, if no positioning measurements before t(k) are taken into account for determining the position at t(k); the size a may be set to k, if all available positioning measurements before t(k) are taken into account. The size b may be set to 1, if only the positioning measurements in the future closest to t(k) are taken into account; the size b may be set to (N-k), if all available positioning measurements in the future after t(k) are taken into account. As further examples, the size a for different time point t(k) may be same or different, and b for different time point t(k) may be same or different, depending on how many positioning measurements are available in the past time window and the future time window.

When there are no available positioning measurements in the future window, for example, when determining the position at t(k) when k = N, the positioning measurements at t(k) and time points in the past time window are used for determining the position at t(k).

In example implementations, when the positioning measurements include GNSS measurements, the server may determine the position at t(k) using the GNSS measurements at t(k) and at time points in the past time window and in the future time window. In further example implementations, the server may determine the position at t(k) using the further aforementioned types of positioning measurements at t(k) and at time points in the past time window and in the future time window.

In some implementations, when assistant information are available, the server may use the assistant information when determining the position at t(k). For example, the server may use the assistant information to correct the positioning measurements, or to evaluate the quality or reliability of the positioning measurements. The server may use the positioning measurements with different confidence levels or different weights for determining the position at t(k).

In some implementations, the movement state may further contain a velocity at a position and/or a time at a position. In such implementations, determining the movement state at t(k) further comprises determining the velocity of the terminal device associated with the position at t(k) and/or a precise time associated with the position at t(k). In such implementations, the server determines the movement state comprising the position, the velocity or the time using the positioning measurements at t(k) and at time points in the past time window and in the future time window.

Corresponding methods for determining the positions, the velocities or the time using the aforementioned positioning measurements are known to the skilled person and therefore not described in more detail here.

In an example implementation, determining the movement state at t(k) using the positioning measurements at t(k) and at time points in the past time window and in the future time window is based on a smoothing filtering, for example, Kalman smoothing. For example, state vectors of the positions or additionally the velocities or the time are modelled using the aforementioned various positioning measurements or additionally the aforementioned various assistant information; the state vectors can be put in a smoother, for example, the Rauch-Tung-Striebel, RTS, smoothing algorithm; the smoother smoothens a state vector at a time point by using state vectors in the past and in the future. The output state vectors contain the smoothened positions, the velocities or the time.

When only the positioning measurements at t(k) and at time points in the past time window are available, determining the movement state at t(k) can be based on a Kalman filtering, and the determined movement states are filtered using the positioning measurements in the past.

Corresponding methods for performing Kalman smoothing and filtering are known to the skilled person and therefore not described in more detail here.

In step 103, the server generates the track of the movement states of the terminal device. When the movement state contains the position, the track of the movement states is generated by combining the positions at all time points t(k) determined in step 102. To be specific, the determined positions at all time points t(k) are combined into a sequence in the order according to k, with the determined position at t(0) being a starting position in the sequence and the position at t(N) being an end position in the sequence. The sequence represents the track of the movement states from the starting position to the end position. In such implementation, the track of the movement states is the track of the determined positions of the terminal device from the determined position at t(0) to the determined position at t(N). When the movement state contains the position and additionally the velocity or the time, the track of the movement states is generated by combining the determined positions and the correspondent velocity or the correspondent time determined in step 102. For example, each determined position at t(k) may be associated with a determined velocity at the position and/or associated with a determined precise time at the position as performed in step 102. The determined positions associated with the correspondent velocities and/or the time at all time points t(k) are combined into a sequence in the order according to k. The sequence represents the track of the movement states from the starting position to the end position. In such implementation, the track of the movement states does not only contain the track of the positions of the terminal device, but also the velocities and/or the time associated with the positions.

After step 103, the generated track of the movement states of the terminal device is available at the server. In an example implementation, any kind of third-party entities may access the generated track directly from the server. In another example implementation, the server may provide the generated track to the terminal device. The terminal device may display the generated track on a display of the terminal device for a user to view. In a further example implementation, a wearable device such as a smart watch may be associated with the terminal device, and the generated track may be alternatively or additionally displayed on a display of the wearable device.

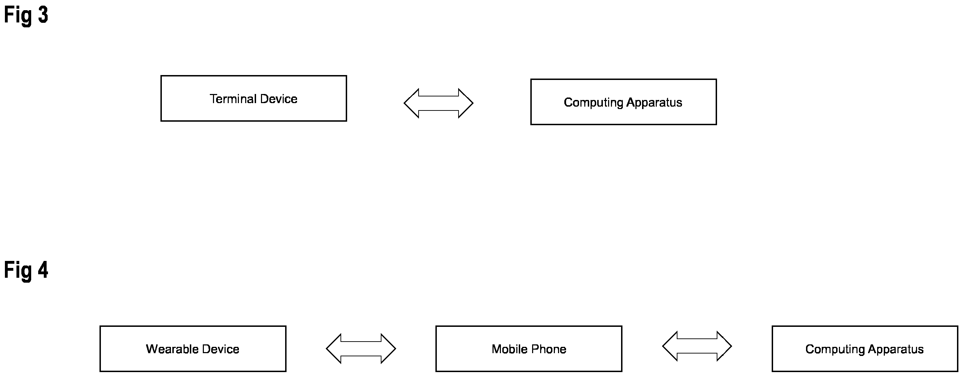

Figure 3 shows an example system comprising a server and a terminal device to carry out various implementations of method 100 for generating a track of movement states of a terminal device.

The terminal device may obtain various positioning measurements, record the positioning measurements and provide the recorded positioning measurements to the server. The server may generate a track of movement states according to various implementations of method 100 and provide the generated track to the terminal device. The terminal device may display the track on a display of the terminal device.

Further implementations of the system become readily apparent from the various implementations described above in conjunction with method 100.

Figure 4 shows an example system comprising a server, a mobile phone and a wearable device to carry out various implementations of method 100 for generating a track of positions movement states of a terminal device.

The wearable device may obtain various positioning measurements. The wearable device may record the positioning measurements. The wearable device may provide the recorded positioning measurements to the server via the mobile phone. The server may generate a track of movement states according to various implementations of method 100 and provide the generated track to the wearable device via the mobile phone. The wearable device may display the generated track on a display of the wearable device. Alternatively, or additionally, the mobile phone may display the generated track on a display of the mobile phone.

Further implementations of the system become readily apparent from the various implementations described above in conjunction with method 100.

Hence, with the various implementations described above for the improved processing concept, positioning measurements in the past and in the future are taken into account for determining the movement states of a terminal device; various positioning measurements and assistant information can be used, and additional movement information other than the positions can be generated under the same framework. The generated track has high accuracy compared with the real track of the terminal device.

Various embodiments of the improved processing concept can be implemented in the form of logic in software or hardware or a combination of both. The logic may be stored in a computer readable or machine-readable storage medium as a set of instructions adapted to direct one or more processors of a (distributed) computer system to perform a set of steps disclosed in embodiments of the improved processing concept. The logic may form part of a computer program product adapted to direct an information-processing device to automatically perform a set of steps disclosed in embodiments of the improved processing concept.

The specification and drawings are, accordingly, to be regarded in an illustrative rather than a restrictive sense. However, it will be evident that various modifications and changes may be made thereunto without departing from the scope of the invention as set forth in the claims.

### LIST OF REFERENCE SIGNS

- 10, 20: track of movement states of a terminal device
- A, B: path end
- d: direction of movement
- 100: method
- 101-103: method steps

## Claims

1. A method performed by a server for generating a track of movement states of a terminal device moving between a first time point T0 to a second time point T, wherein the movement state comprises a position of the terminal device and T0 < T, the method comprising:
- obtaining, via the terminal device, positioning measurements at respective time points t(k) between T0 and T, wherein k is an integer and is an index of the time points, 0 ≤ k ≤ N, N is an integer and N > 0, t(0) = T0, and t(N) = T;
- determining for each time point t(k), the movement state of the terminal device at the time point t(k), wherein
- when 0 ≤ k < N, determining the position of the terminal device at t(k) using the positioning measurements between a respective third time point t(k-a) and a respective fourth time point t(k+b), wherein a and b are integers, 0 ≤ a ≤ k, and 0 < b ≤ (N-k); and
- when k = N, determining the position of the terminal device at t(k) using the positioning measurements between the third time point t(k-a) and t(k); and
- generating the track of the movement states of the terminal device by combining the determined positions.

2. The method according to claim 1, wherein when 0 ≤ k < N, determining the position of the terminal device at t(k) is based on Kalman smoothing and comprises:
- formulating a state vector at each t(k), wherein the state vector comprises a coarse position of the terminal device based on the positioning measurements at t(k); and
- computing the position at t(k) using the Kalman smoothing based on the state vectors between t(k-a) and t(k+b).

3. The method according to any of claims 1 to 2, wherein the movement state further comprises a velocity of the terminal device and/or a time corresponding to the position of the terminal device.

4. The method according to any of claims 1 to 3, wherein the positioning measurements comprises at least one of: global navigation satellite system, GNSS, measurements and sensor measurements, wherein the GNSS measurements comprise Doppler measurements and ranging measurements.

5. The method according to any of claims 1 to 4, wherein determining the position of the terminal device at t(k) further comprises using assistant information, wherein the assistant information comprises at least one of: a position of a GNSS satellite, an orbit of a GNSS satellite, ionospheric data, troposphere models, inertial sensor data, and GNSS correction data.

6. The method according to any of claims 1 to 5, the method further comprising:
- obtaining, by the terminal device, positioning measurements at each t(k);
- recording, by the terminal device, the positioning measurements of each t(k); and
- providing, by the terminal device, the recorded positioning measurements to the server.

7. The method according to any of claims 1 to 6, further comprising:
- providing by the server the track of the movement states of the terminal device to the terminal device; and
- displaying by the terminal device the track on a display of the terminal device.

8. A computing apparatus configured to:
- obtain positioning measurements at respective time points t(k) between a first time point T0 to a second time point T of a terminal device, wherein k is an integer and is an index of the time points, 0 ≤ k ≤ N, N is an integer, t(0) = T0, and t(N) = T;
- determine a movement state of the terminal device for each time point t(k), wherein the movement state comprises a position of the terminal device, wherein
- when 0 ≤ k < N, determine the position of the terminal device at t(k) using the positioning measurements between a respective third time point t(k-a) and a respective fourth time point t(k+b), wherein a and b are integers, 0 ≤ a ≤ k, and 0 < b ≤ (N-k); and
- when k = N, determine the position of the terminal device at t(k) using the positioning measurements between the third time point t(k-a) and t(k); and
- generate a track of the movement states of the terminal device by combining the determined positions.

9. The computing apparatus according to claim 8, when 0 ≤ k < N, the computing apparatus further configured to:
- formulate a state vector at each t(k), wherein the state vector comprises a coarse position of the terminal device based on the positioning measurements at t(k); and
- compute the position at t(k) using Kalman smoothing based on the state vectors between t(k-a) and t(k+b).

10. The computing apparatus according to claim 8 or 9, wherein the movement state further comprises a velocity of the terminal device and/or a time corresponding to the position of the terminal device.

11. The computing apparatus according to any of claims 8 to 10, computing apparatus according to any of claims 8 to 10, wherein the positioning measurements comprises at least one of: global navigation satellite system, GNSS, measurements and sensor measurements, wherein the GNSS measurements comprise Doppler measurements and ranging measurements.

12. A system comprising the computing apparatus according to any of claims 8 to 11 and a terminal device, wherein the terminal device is configured to:
- obtain positioning measurements at each t(k) using the received GNSS signals;
- record the positioning measurements of each t(k); and
- provide the recorded positioning measurements of each t(k) to the computing apparatus.

13. The system according to claim 12, wherein
- the computing apparatus is further configured to provide the track of movement states of the terminal device to the terminal device; and
- the terminal device is further configured to display the track on a display of the terminal device.

14. The system according to claim 12 or 13, further comprising a mobile phone, wherein the terminal device is a wearable device and further configured to provide the recorded positioning measurements of each t(k) to the computing apparatus via the mobile phone.

15. A computer program comprising instructions which, when executed on one or more processors of at least a computing device, cause the one or more processors to perform the operations of a server according to any one of claims 1 to 7.
